# EUROPEAN PATENT APPLICATION

(11) **EP 2 371 744 A1**
(43) Date of publication of application: **05.10.2011**
(21) Application number: 09838096.7
(22) Date of filing: 08.04.2009
(51) Int. Cl.: B65D 90/02, B65D 90/00, E04H 5/02

(54) **A SPECIAL CONTAIINER FOR MOBILE-TYPE EXTRUDING EQUIPMENT**

(30) Priority: 30.12.2008 CN 200810247397
(71) Applicant: Chen, Yuanwen, Guangdong 528415 (CN)
(72) Inventor: Chen, Yuanwen, Guangdong 528415 (CN)
(74) Representative: Becker Kurig Straus
(86) International application number: PCT/CN2009/071197
(87) International publication number: WO 2010/081309

(57) **Abstract**

A special container for mobile-type ex-truding equipment includes a base(1), side boars(2) are hinged on the periphery of the base(1), a base floor(3) is fixed on the base(1), a reservoir(4) is fixed under the base(1), an extruding equipment(5) is fixed on the base floor(3), a simple bracket(6) is fixed on the side boards(2), the simple bracket(6) is covered with a sailcloth(7), This special container reduces the production and uses of intermediate links, reduces costs and processing time, reduces unnecessary waste and increases production efficiency, and is easy to in harsh environments extrusion-type products processing.

## Description

### BACKGROUND OF THE INVENTION

### 1. Technical Field

The present invention relates to a container, and more especially, to a special container for mobile extrusion equipment.

### 2. Description of Related Art

The products made by extrusion methods in the prior art are all produced in a fixed workshop. Most of the products are hollow inside, and are transported to customers or sites for use by various transportation vehicles (including trucks, ships and trains) after being finished in a workshop. As the products are hollow inside, much space in the transportation vehicles is wasted, resulting in high transportation costs. Moreover, due to the limitations of transport vehicles, products are produced in fixed lengths in factories for better loading, unloading and stacking. However, as customers usually have different requirements for the length of products, unneeded parts are cut off, which results in huge waste. Also because longer products cannot be produced, there is extra connection work as well as an increase in additional installation expenditures.

### BRIEF SUMMARY OF THE INVENTION

To address the problems above, the present invention aims at providing a container especially designed for mobile extrusion equipment, wherein the container can reduce some production and usage procedures, save costs and processing time, reduce unnecessary waste, improve production efficiency and make it easier to produce and process extrusion products in a poor environment.

The present invention adopts the following technical solution for solving technical problems:

A special container for mobile extrusion equipment, comprising a case; wherein said case includes a base and side plates articulated around the base, and extrusion equipment set in the case with side plates which can be set level.

At least two of the abovementioned cases are connected in series through a track.

The side plates are articulated around the base, a floor is set above the said base, a reservoir is set under the floor, the extrusion equipment is set above the floor, a simple holder is set above the said side plates, and a piece of canvas covers the simple holder.

A water pump is set on the floor above the reservoir.

A lifting windlass is set on the floor, and the said lifting windlass is connected to the top of the said side plates through a steel wire rope.

The canvas is connected to the canvas crimping machine on the side plates.

The track is set above the floor, and said extrusion equipment is set on the track.

The extrusion equipment includes an extrusion machine, a mold, a vacuum calibration bath, a spray bath, a haul-off unit, cutter, and a stacker.

The special container for mobile extrusion equipment provided by the present invention usually uses a 40-foot special container. The quantity of the containers depends on the length of the production line. The shape and size of the special container is the same as a standard container, but the structure designed is different. The top of the special container is an open-type, and is covered and bound by the canvas during transportation. The canvas can be a simple tent during installation; the four side plates of the special container can be opened downwards by the windlass through a hinge, and forms into a working platform with the surface on the base of the special container; the track for moving the extrusion equipment is installed on the surface of the base of the special container, the empty space in the base is used as a reservoir, more than two bases of the special containers are connected in series through pipes and form a big reservoir, and a water pump is installed; an air compressor is installed on the base to provide compressed air for the production line; a special tool box and a mold shelf are set; the expandable holders are installed on the side doors and the side plates of the container, the holders will become the framework and form a simple tent with the canvas on the top of the container when it is open; more functional places such as a workstation, lounge, washroom, bathroom, kitchen and simple medical kit can be set in the spare space of the container.

The special container for mobile extrusion equipment provided by the present invention solves the packaging and transportation problems of the extrusion equipment without the need for the production of wooden package cases, thus guaranteeing the protection of the equipment during transportation; furthermore, the production time is reduced, after the container arrives at the workshop and is placed at the designated area, the production can be started as long as all the side plates are removed, the container base forms into a platform and the power supply is connected, thus reducing the infrastructure work for conventional factories, including ground flattening, ditch excavation and the installation of water and gas pipes, decreasing some production and usage procedures, saving costs and processing times, and reducing unnecessary waste, improving production efficiency and making it easier to produce and process extrusion production in a poor environment.

### BRIEF DESCRIPTION OF THE SEVERAL VIEWS OF THE DRAWINGS

The following is a further description of the present invention with reference to the figures and the embodiments:
FIG. 1 is the sectional view of the internal structure of the special container for mobile extrusion equipment;
FIG. 2 is the schematic view of the unfolded structure of the special container for mobile extrusion equipment;

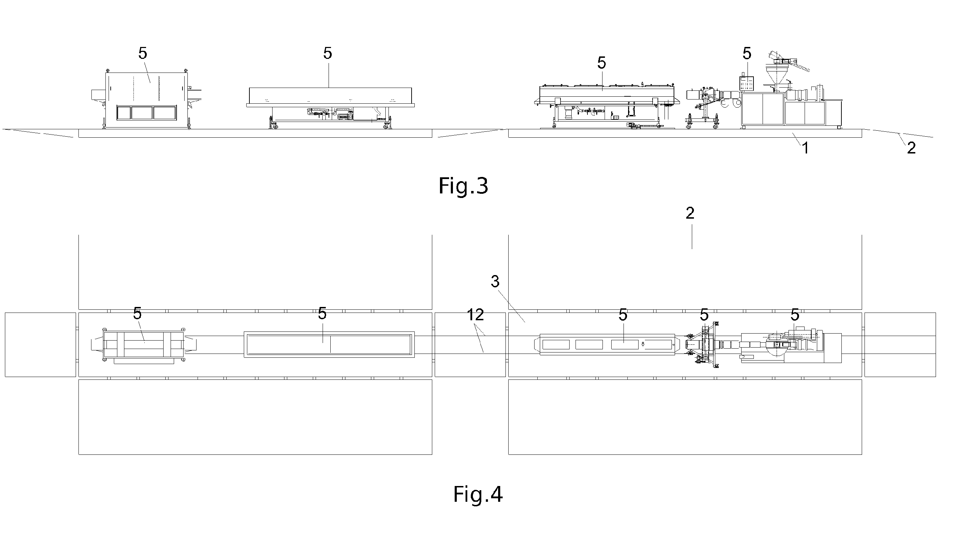

FIG. 3 is the main view of the special container for mobile extrusion equipment in working status;
FIG 4 is the vertical view of the special container for mobile extrusion equipment in working status.

### DETAILED DESCRIPTION OF THE INVENTION

The following is a further description of the present invention with reference to the figures and the embodiments, but without a limitation to the present invention.

A preferred embodiment is as below:

A special container for mobile extrusion equipment, comprising a case 1, the side plates 2 are articulated around the base 1, a floor 3 is set above the said base 1, a reservoir 4 is set under the floor 3, the extrusion equipment 5 is set above the floor 3, a simple holder 6 is set on the said side plates 2, and a piece of canvas 7 covers the simple holder 6.

A water pump 8 is set on the floor 3 above the reservoir 4.

A lifting windlass 9 is set above the floor 3, and the said lifting windlass 9 is connected to the top of the said side plates 2 through a steel wire rope 10.

The canvas 7 is connected to the canvas crimping machine 11 on the side plates 2.

The track 12 is set above the floor 3, and said extrusion equipment 5 is set above the said track 12.

Extrusion equipment 5 includes an extrusion machine, a mold, a vacuum calibration box, a spray box, a tractor, cutter, and a piling bin.

When being used, the special container for mobile extrusion equipment provided by the present invention is transported to the designated place and the container is unloaded, the distance of the container, the flatness of the ground and straightness of the container are adjusted according to the requirements, the side plates 2 are opened successively to form a work platform after the container is connected to the power supply and the container bases are connected through pipes.

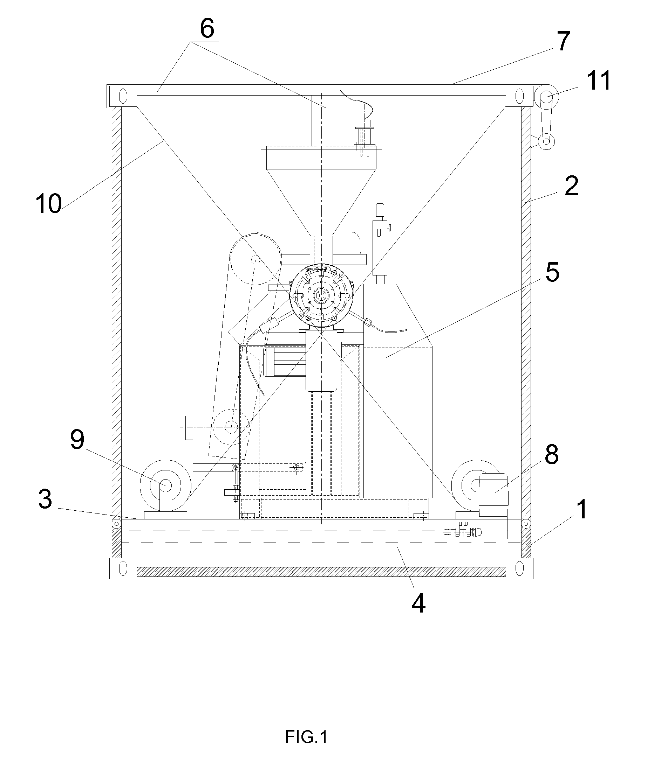

As shown in FIG 1, the top of the special container is an open-type, the holder 6 for installing tent is used as a crossbeam, and is bound and covered by the canvas 7, and the canvas 7 is tightened by the canvas crimping machine 11; the base 1 of the special container is different from that of a standard container, the base 1 is designed to be double-layer sealing structure, the empty space in the base 1 is used as a reservoir 4, bases 1 of three special containers are connected in series through pipes and form a big reservoir whose volume reaches 30 to 36 cubic meters, so the internal space of the special container is smaller than that of a standard container; the two site doors and two side plates of the special container can be opened downwards by the lifting windlass 9 through a hinge, the opened side doors and side plates 2 form a work platform with the upper surface of base 1 of the container, and the place for installing the simple tent holder is set on the side plates 2; the track 12 for moving the extrusion equipment is set on the upper surface of the base 1 of the special container, and the track 12 is also installed on the inner surface of the side door of the special container; the water supply system is installed in the special container, and the water supply system consists of a water pump and pipes; an air compressor system, lighting system, tool box and mold shelf are installed in the special container.

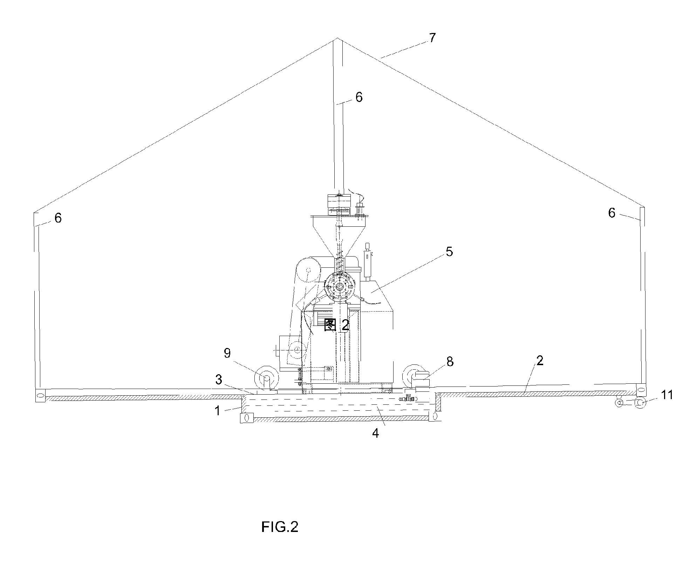

As shown in FIG 2, the canvas crimping machine 11 releases the canvas 7 when the side plates 2 are opened, the equipment is not prone to be damaged when the canvas 7 is released due to the protection of the simple holder 6, wherein the simple holder 7 is also a holder for hydraulic lifting , a simple tent is formed when the lifting windlass 9, canvas crimping 11 and simple hydraulic holder work together.

A special container for mobile extrusion equipment provided by the present invention is mainly applicable to the production containers for plastic extrusion products, including plastic pipes, plastic profile production containers, etc. It is also applicable to plastic granulation, aluminum-plastic compound pipes, plastic-steel compound pipes, wire and cables, optical cables, aluminum alloy profiles and food extrusion containers, etc.

The abovementioned embodiment is only one of the preferred embodiments for the present invention. The common changes and substitutions within the technical solution scope of the present invention conducted by the technical personnel skilled in this art should be covered in the protection scope of the present invention.

## Claims

1. A special container for mobile extrusion equipment, comprising a case, wherein the said case includes a base and the side plates articulated around the base, **characterized in that** the extrusion equipment is set in the case with side plates which can be set level.

2. The special container for mobile extrusion equipment according to Claim 1, **characterized in that** at least two abovementioned cases are connected in series through a track.

3. The special container for mobile extrusion equipment according to Claim 1, **characterized in that** the side plates are articulated around the base, a floor is set above the said base, a reservoir is set under the floor, the extrusion equipment is set above the floor, a simple holder is set above the said side plates, and a piece of canvas covers the simple holder.

4. The special container for mobile extrusion equipment according to Claim 3, **characterized in that** a water pump is set on the floor above the reservoir.

5. The special container for mobile extrusion equipment according to Claim 3, **characterized in that** a lifting windlass is set on the floor, and the said lifting windlass is connected to the top of the said side plates through a steel wire rope.

6. The special container for mobile extrusion equipment according to Claim 3, **characterized in that** the canvas is connected to the canvas crimping machine on the side plates.

7. The special container for mobile extrusion equipment according to Claim 3, **characterized in that** the track is set above the floor, and the said extrusion equipment is set on the said track.

8. The special container for mobile extrusion equipment according to Claim 1 or 3, **characterized in that** the extrusion equipment includes an extrusion machine, a mold, a vacuum calibration box, a spray box, a tractor, cutter, and a piling bin.
